# FASCICULE DE BREVET EUROPEEN

(11) **EP 3 650 332 B1**
(45) Date de publication et mention de la délivrance du brevet: **20.01.2021**
(21) Numéro de dépôt: 19203729.9
(22) Date de dépôt: 17.10.2019
(51) Int. Cl.: B64C 1/40, B32B 3/12, B32B 3/26, E04B 1/86, F02C 7/045, F02K 1/82, G10K 11/168, G10K 11/172, B64D 33/02

(54) **ASSEMBLAGE CONSTITUANT UN ISOLANT ACOUSTIQUE**
ZUSAMMENBAU EINER SCHALLDÄMMISOLIERUNG
ASSEMBLY FORMING AN ACOUSTIC INSULATOR

(30) Priorité: 07.11.2018 FR 1871386
(43) Date de publication de la demande: 13.05.2020
(73) Titulaire: AIRBUS OPERATIONS (S.A.S.), 31060 Toulouse (FR)
(72) Inventeur: CZAPLA, Lionel, 31060 Toulouse Cedex 9 (FR); RAVISE, Florian, 31060 Toulouse Cedex 9 (FR)
(74) Mandataire: Gicquel, Olivier Yves Gérard

(56) Documents cités:
- EP-A1- 2 960 023
- FR-A1- 3 026 122
- US-A- 3 952 831
- US-A1- 2010 320 201
- US-A1- 2015 027 629
- US-A1- 2015 041 248
- US-B1- 8 707 747

## Description

La présente invention concerne un assemblage constituant un isolant acoustique, ainsi qu'un procédé de fabrication d'un tel assemblage.

Lors de son fonctionnement, un moteur d'aéronef génère du bruit. Ce moteur est logé dans une nacelle et pour atténuer ce bruit, il est connu de mettre en place des assemblages constituant un isolant acoustique autour du moteur dans la structure de la nacelle.

De tels assemblages constituant un isolant acoustique prennent par exemple la forme de structures en nid d'abeilles. Une telle structure en nid d'abeilles comporte deux plaques parallèles dont une est perforée et entre lesquelles sont agencées des cellules hexagonales juxtaposées les unes aux autres.

On connait de la demande de brevet EP2960023, un assemblage comprenant des cônes qui sont insérés individuellement dans des cellules hexagonales d'une structure en nid d'abeille afin de constituer un isolant acoustique qui combine le principe quart d'ondes et un résonateur d'Helmholtz. Dans d'autres applications, comme décrit dans la demande de brevet US2015/027629, les cônes sont usinés dans un insert monobloc.

Bien que d'un point de vue acoustique, de tels assemblages donnent de bons résultats, il est souhaitable de trouver un assemblage constituant un isolant acoustique qui permette d'atténuer un certain nombre de fréquences acoustiques et qui soit facile à fabriquer.

Un objet de la présente invention est de proposer un assemblage constituant un isolant acoustique qui puisse atténuer un certain nombre de fréquences acoustiques et qui soit facile à fabriquer.

A cet effet, est proposé un assemblage tel que revendiqué dans la revendication 1.

Un tel assemblage permet d'obtenir une atténuation de plusieurs fréquences acoustiques et est facile à fabriquer.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- La figure 1 est une vue en perspective d'un assemblage constituant un isolant acoustique selon un premier mode de réalisation de l'invention,
- la figure 2 est une vue en perspective d'une première structure de l'isolant acoustique de la figure 1,
- la figure 3 est une vue en perspective d'une deuxième structure de l'isolant acoustique de la figure 1, et
- la figure 4 est une vue en perspective d'un assemblage constituant un isolant acoustique selon un deuxième mode de réalisation de l'invention.

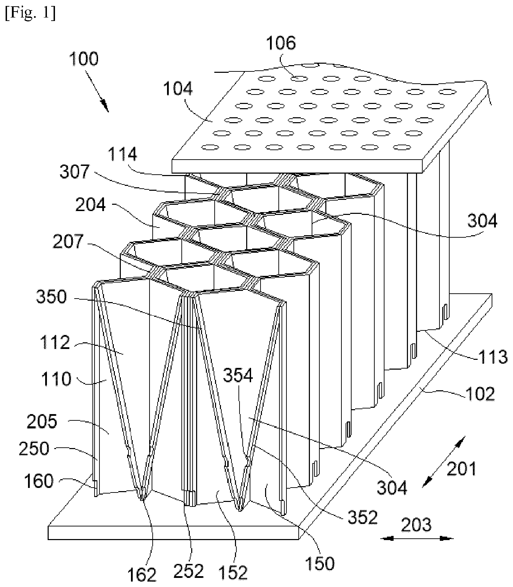

En relation avec la figure 1, un assemblage 100 constituant un isolant acoustique comporte une première plaque 102 et une deuxième plaque 104 qui sont à distance l'une de l'autre. L'une des plaques, ici la deuxième plaque 104, est percée de trous 106 pour permettre le passage des ondes acoustiques.

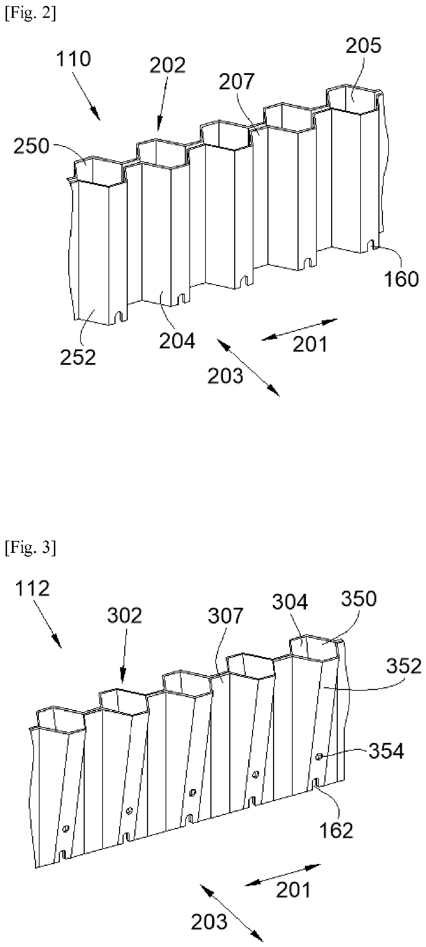

Entre la première plaque 102 et la deuxième plaque 104, sont disposées une pluralité de premières structures 110 (détaillées à la figure 2) et une pluralité de deuxièmes structures 112 (détaillées à la figure 3).

La première structure 110 forme une structure en nid d'abeilles qui comporte une succession de cages 202 s'étendant selon une première direction 201, formant une ligne, et dans l'assemblage 100, la première structure 110 se répète selon une deuxième direction 203 perpendiculaire à la première direction 201, formant ainsi des colonnes. Chaque cage 202 est creuse et présente une paroi avec une section hexagonale et à six pans 204 parallèles 2 à 2. Chaque cage 202 délimite une alvéole 205 hexagonale.

Sur une ligne, chaque cage 202 est rattachée à chaque cage 202 voisine par une paroi de jonction 207 qui est parallèle à la première direction 201. Chaque paroi de jonction 207 de la première structure 110 est double et est donc constituée de deux pans parallèles. Les deux pans de la paroi de jonction 207 sont distants l'un de l'autre pour permettre l'introduction d'une paroi de liaison 307 de la deuxième structure 112 comme cela est expliqué ci-dessous.

Selon la deuxième direction 203, les cages 202 sont disposées les unes contre les autres en quinconce et deux cages 202 voisines présentent un pan 204 commun. En outre, chaque paroi de jonction 207 d'une ligne forme l'une des pans 204 de la cage 202 de la ligne voisine.

Les pans 204 et les parois de jonction 207 s'étendent entre une première extrémité 113 solidaire de la première plaque 102 et une deuxième extrémité 114 solidaire de la deuxième plaque 104. Les extrémités 113 et 114 sont fixées à la première plaque 102 et la deuxième plaque 104, par exemple par collage, soudage ou autres.

Pour une ligne, la première structure 110 est constituée d'une première bande 250 et d'une deuxième bande 252, qui sont disposées en regard l'une de l'autre et s'étendent entre la première plaque 102 et la deuxième plaque 104.

Pour chaque cage 202, la première bande 250 est conformée pour former la moitié de la paroi de ladite cage 202 sous la forme de trois pans 204 successifs et la deuxième bande 252 est conformée pour former l'autre moitié de la paroi de ladite cage 202 sous la forme de trois autres pans 204 successifs de ladite cage 202.

Pour deux demi-hexagones successifs, chaque bande 250, 252 comporte un pan de la paroi de jonction 207 qui relie deux demi-hexagones consécutifs.

La deuxième structure 112 comporte une succession de cônes 302 s'étendant selon la première direction 201 et dans l'assemblage 100, la deuxième structure 112 se répète selon la deuxième direction 203.

La base de chaque cône 302 a une section hexagonale et se positionne entre les deux bandes 250 et 252 de la première structure 112 au niveau de la deuxième extrémité 114 tandis que le sommet de chaque cône 302 vient en contact avec la première plaque 102. Chaque cône 302 forme un cône hexagonal avec une paroi à six pans 304. La base hexagonale présente les dimensions appropriées à celles de l'alvéole 205 pour pouvoir s'y loger.

Sur une ligne, chaque cône 302 est séparé de son voisin par une paroi de liaison 307 qui est parallèle à la première direction 201. Chaque paroi de liaison 307 est double et est donc constituée de deux pans parallèles et solidaires.

Chaque cône 302 se positionne dans une alvéole 205 et la paroi de liaison 307 se positionne entre les pans de la paroi de jonction 207.

Pour une ligne, la deuxième structure 112 est constituée d'une première bande 350 et d'une deuxième bande 352, qui sont disposées en regard l'une de l'autre et s'étendent entre les bases et les sommets des cônes 302, c'est-à-dire entre la première plaque 102 et la deuxième plaque 104.

Pour chaque cône 302, la première bande 350 est conformée pour former la moitié de la paroi dudit cône 302 sous la forme de trois pans 304 successifs dudit cône 302 et la deuxième bande 352 est conformée pour former l'autre moitié de la paroi dudit cône 302 sous la forme des trois autres pans 304 successifs dudit cône 302.

Pour deux demi-cônes successifs, chaque bande 350, 352 comporte un pan de la paroi de liaison 307 qui relie deux demi-cônes consécutifs.

Pour chaque bande 350, 352, au moins l'une des moitiés de paroi de chaque cône 302 est percée d'un trou 354 pour le passage des ondes acoustiques, c'est-à-dire ici au moins l'un des pans 304.

Ainsi, sur une ligne selon la première direction 201, dans chaque alvéole 205 de la première structure 110 est disposé un cône 302 de la deuxième structure 112. Comme les parois de liaison 307 se prolongent d'une alvéole 205 à l'autre, le volume entre le cône 302 et la paroi de la cage 202 où ledit cône 302 est logé, est divisé en deux chambres 150 et 152 distinctes.

En outre, entre deux premières structures 110 voisines selon la deuxième direction 203, une deuxième structure 112 est également mise en place. Les deux premières structures 110 voisines sont espacées l'une de l'autre pour permettre le passage des parois de liaison 307.

Un tel assemblage 100 constitue ainsi un isolant acoustique qui combine le principe quart d'ondes et un résonateur d'Helmholtz. L'intérieur de chaque cône 302 atténue les hautes fréquences, et les chambres 150 et 152 atténuent les basses fréquences. En outre, il est possible de réaliser des cônes 302 asymétriques de manière à obtenir des chambres 150 et 152 de volumes différents afin d'atténuer deux basses fréquences différentes.

En outre, un tel assemblage 100 est facile à réaliser.

Selon les matériaux utilisés, chaque bande 250, 252, 350, 352 peut être réalisée par emboutissage, thermoformage ou pliage, puis fixée par tous moyens appropriés, soudage, collage...

En outre, les densités et les épaisseurs des bandes 250, 252, 350, 352 peuvent être différentes afin d'avoir un équilibre entre la tenue mécanique de l'assemblage 100 et la souplesse pour le formage pour les bandes.

Le principe d'assemblage consiste à fixer une première bande 350 de la deuxième structure 112 à une première bande 250 de la première structure 110, puis à fixer une deuxième bande 352 de la deuxième structure 112 à la première bande 350 de la deuxième structure 112 ainsi fixée, puis à fixer une deuxième bande 252 de la première structure 110 à la deuxième bande 352 de la deuxième structure 112 ainsi fixée.

Le processus se poursuit de la même manière, en considérant que la deuxième bande 252 de la première structure 110 ainsi fixée constitue la première bande 250 de la première structure 110 suivante.

Le procédé de fabrication et d'assemblage est donc simple et met en œuvre des étapes simples.

L'ensemble est alors fixé entre la première plaque 102 et la deuxième plaque 104.

Le procédé de fabrication de l'assemblage 100 comporte ainsi :
- une première étape au cours de laquelle une première bande 350 de la deuxième structure 112 est fixée à une première bande 250 de la première structure 110,
- une deuxième étape au cours de laquelle une deuxième bande 352 de la deuxième structure 112 est fixée à la première bande 350 de la deuxième structure 112 ainsi fixée,
- une troisième étape au cours de laquelle une deuxième bande 252 de la première structure 110 est fixée à la deuxième bande 352 de la deuxième structure 112 ainsi fixée,
- tant qu'une première structure 110 ou une deuxième structure 112 doit être ajoutée, une étape de bouclage sur la première étape en considérant que la deuxième bande 252 de la première structure 110 ainsi fixée constitue la première bande 250 de la première structure 110 suivante,
- une étape au cours de laquelle, les premières et deuxièmes structures 110, 112 ainsi fixées sont fixées entre la première plaque 102 et la deuxième plaque 104.

Lors de la fixation entre la première plaque 102 et la deuxième plaque 104, les premières extrémités 113 et les sommets des cônes 302 sont fixés à la première plaque 102, et les deuxièmes extrémités 114 et les bases des cônes 302 sont fixées à la deuxième plaque 104.

Pour prendre en compte la courbure lorsque l'assemblage 100 doit être mis en place contre une partie arquée comme par exemple une entrée d'air, un plug acoustique de tuyère de turbomachine, etc. Les bandes 250, 252, 350 et 352 sont assemblées les unes aux autres directement sur un outillage reprenant la forme arquée correspondant à ladite partie arquée. C'est-à-dire que les bandes sont dans un premier temps conformées en prenant en compte la courbure finale à obtenir, puis elles subissent un formage, et elles sont ensuite fixées les unes aux autres sur l'outillage.

Lorsqu'il y a un risque de présence de liquides dans l'assemblage 100, les extrémités des bandes 250, 252, 350 et 352 qui se trouvent le plus bas, présentent des perçages 160 et 162 pour permettre le drainage des liquides. Dans le mode de réalisation de l'invention présenté sur les Figs. 1 à 3, les perçages 160 et 162 sont au niveau de la première plaque 102, mais dans un autre mode de réalisation où la première plaque 102 serait au-dessus de la deuxième plaque 104, les perçages seraient réalisés au niveau de la deuxième plaque 104.

Les perçages 162, outre leur fonction de passage pour des liquides à drainer, permettent également l'augmentation du volume en faisant communiquer les différents volumes entre eux.

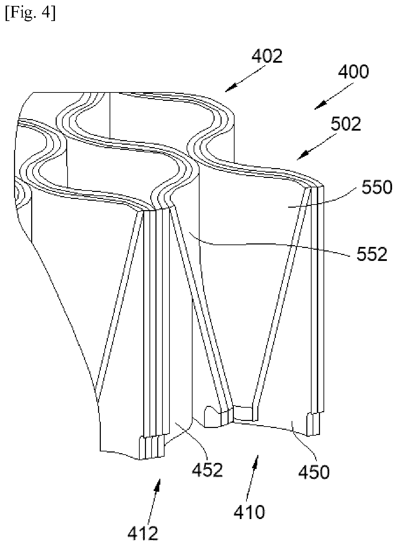

La figure 4 montre un assemblage 400 constituant un isolant acoustique selon un deuxième mode de réalisation de l'invention. L'assemblage 400 selon le deuxième mode de réalisation est similaire à l'assemblage 100 selon le premier mode de réalisation sauf en ce que les formes hexagonales sont remplacées par des formes circulaires.

Ainsi, la première structure 410 forme une structure en nid d'abeilles qui comporte une succession de cages 402 chacune étant creuse et présentant une section circulaire délimitant ainsi chacune une alvéole cylindrique. Pour une ligne, la première structure 410 est constituée d'une première bande 450 et d'une deuxième bande 452, qui sont disposées en regard l'une de l'autre et s'étendent entre la première plaque et la deuxième plaque. Pour chaque cage 402, la première bande 450 est conformée pour former la moitié de la paroi de ladite cage 402 qui prend ici la forme d'un demi-cylindre et la deuxième bande 452 est conformée pour former l'autre moitié de la paroi de ladite cage 402 qui prend ici la forme d'un demi-cylindre.

Les parois de jonction sont également constituées de deux pans distants l'un de l'autre. Dans le deuxième mode de réalisation, les parois de jonction prennent la forme d'arc de cylindre.

La deuxième structure 412 comporte une succession de cônes 502 où la base de chaque cône 502 a une section circulaire et se positionne entre les deux bandes 450 et 452 de la première structure 412. Chaque cône 502 forme un cône de révolution. La base circulaire présente les mêmes dimensions que l'alvéole pour pouvoir s'y loger.

Pour une ligne, la deuxième structure 412 est constituée d'une première bande 550 et d'une deuxième bande 552, qui sont disposées en regard l'une de l'autre et s'étendent entre les bases et les sommets des cônes 502, c'est-à-dire entre la première plaque et la deuxième plaque. Pour chaque cône 502, la première bande 550 est conformée pour former la moitié de la paroi dudit cône 502 qui prend ici la forme d'un demi-cône de révolution et la deuxième bande 552 est conformée pour former l'autre moitié de la paroi dudit cône 502 qui prend ici la forme d'un demi-cône de révolution.

Dans le deuxième mode de réalisation, les parois de liaison prennent la forme d'arc de cylindre.

Bien sûr, il est également possible de prévoir que les sections circulaires ou hexagonales sont remplacées par des sections rectangulaires.

Les possibilités d'asymétrie des cônes et de présence des perçages sont applicables à tous les modes de réalisation.

Ainsi d'une manière générale, chaque première structure 110, 410 comporte une succession de cages 202, 402, chacune délimitant une alvéole 205 présentant une section d'une forme (hexagonale, circulaire, rectangulaire), et entre deux cages 202, 402 voisines, une paroi de jonction 207 constituée de deux pans distants l'un de l'autre.

D'une manière générale, chaque deuxième structure 112, 412 comporte une succession de cônes 302, 502, chacun présentant une base et un sommet, et entre deux cônes 302, 502 voisins, une paroi de liaison 307 constituée de deux pans, où la base présente une section de la même forme que la section des alvéoles 205.

D'une manière générale, chaque première structure 110, 410 est constituée d'une première bande 250, 450 et d'une deuxième bande 252, 452 disposées en regard l'une de l'autre et s'étendent entre la première plaque 102 et la deuxième plaque 104, où pour chaque cage 202, 402, la première bande 250, 450 est conformée pour former la moitié de la paroi de ladite cage 202, 402 et la deuxième bande 252, 452 est conformée pour former l'autre moitié de la paroi de ladite cage 202, 402, et où pour deux moitiés successives, chaque bande 250, 252, 450, 452 comporte un pan de la paroi de jonction 207 qui relie deux moitiés consécutives. Selon le cas, la moitié de la paroi d'une cage 202, 402 est constituée de trois pans 204 successifs, ou d'un demi-cylindre.

D'une manière générale, chaque deuxième structure 112, 412 est constituée d'une première bande 350, 550 et d'une deuxième bande 352, 552 disposées en regard l'une de l'autre et s'étendent entre la première plaque 102 et la deuxième plaque 104, où pour chaque cône 302, 502, la première bande 350, 550 est conformée pour former la moitié de la paroi dudit cône 302, 502 et la deuxième bande 352, 552 est conformée pour former l'autre moitié de la paroi dudit cône 302, 502, où pour chaque bande 350, 352, 450, 452, au moins l'une des moitiés de paroi de chaque cône 302, 502 est percée d'un trou 354, et où pour deux moitiés successives, chaque bande 350, 352, 450, 452 comporte un pan de la paroi de liaison 307 qui relie deux moitiés consécutives. Selon le cas, la moitié de la paroi d'un cône 302, 502 est constituée de trois pans 304 successifs, ou d'un demi-cône de révolution.

D'une manière générale, chaque cône 302, 502 se trouve dans une alvéole 205 et chaque paroi de liaison 307 se trouve entre les deux pans d'une paroi de jonction 207, et entre deux premières structures 110, 410 voisines, une deuxième structure 112, 412 est également mise en place.

## Revendications

1. Assemblage (100, 400) constituant un isolant acoustique et comportant une première plaque (102), une deuxième plaque (104) percée de trous (106), une pluralité de premières structures (110, 410) disposées les unes à côté des autres selon une deuxième direction (203), et une pluralité de deuxièmes structures (112, 412) disposées les unes à côté des autres selon la deuxième direction (203),
où chaque première structure (110, 410) comporte une succession de cages (202, 402), chacune délimitant une alvéole (205) présentant une section d'une forme, et entre deux cages (202, 402) voisines, une paroi de jonction (207) constituée de deux pans distants l'un de l'autre,
où chaque deuxième structure (112, 412) comporte une succession de cônes (302, 502), chacun présentant une base et un sommet, et entre deux cônes (302, 502) voisins, une paroi de liaison (307) constituée de deux pans, où la base présente une section de la même forme que la section des alvéoles (205),
où chaque première structure (110, 410) est constituée d'une première bande (250, 450) et d'une deuxième bande (252, 452) disposées en regard l'une de l'autre et s'étendent entre la première plaque (102) et la deuxième plaque (104), où pour chaque cage (202, 402), la première bande (250, 450) est conformée pour former la moitié de la paroi de ladite cage (202, 402) et la deuxième bande (252, 452) est conformée pour former l'autre moitié de la paroi de ladite cage (202, 402), et où pour deux moitiés successives, chaque bande (250, 252, 450, 452) comporte un pan de la paroi de jonction (207) qui relie deux moitiés consécutives,
où chaque deuxième structure (112, 412) est constituée d'une première bande (350, 550) et d'une deuxième bande (352, 552) disposées en regard l'une de l'autre et s'étendent entre la première plaque (102) et la deuxième plaque (104), où pour chaque cône (302, 502), la première bande (350, 550) est conformée pour former la moitié de la paroi dudit cône (302, 502) et la deuxième bande (352, 552) est conformée pour former l'autre moitié de la paroi dudit cône (302, 502), où pour chaque bande (350, 352, 450, 452), au moins l'une des moitiés de paroi de chaque cône (302, 502) est percée d'un trou (354), et où pour deux moitiés successives, chaque bande (350, 352, 450, 452) comporte un pan de la paroi de liaison (307) qui relie deux moitiés consécutives,
de manière à ce que chaque cône (302, 502) se trouve dans une alvéole (205) et à ce que chaque paroi de liaison (307) se trouve entre les deux pans d'une paroi de jonction (207), et où entre deux premières structures (110, 410) voisines, une deuxième structure (112, 412) est également mise en place.

2. Assemblage (100, 400) selon la revendication 1, **caractérisé en ce qu'**au moins un cône (302, 502) est asymétrique, de manière à ce que les volumes des deux chambres (150, 152) créées entre ledit cône (302, 502) et la paroi de la cage (202, 402) où il est logé soient différents.

3. Assemblage (100, 400) selon l'une des revendications 1 ou 2, **caractérisé en ce qu'**au moins l'une des extrémités des bandes (250, 252, 350, 352, 450, 452, 550, 552) présente des perçages (160, 162).

4. Assemblage (100) selon l'une des revendications 1 à 3, **caractérisé en ce que** la forme est un hexagone, **en ce que** chaque moitié de paroi d'une cage (202) est constituée de trois pans (204) successifs, et **en ce que** chaque moitié de la paroi d'un cône (302) est constituée de trois pans (304) successifs.

5. Assemblage (400) selon l'une des revendications 1 à 3, **caractérisé en ce que** la forme est un cercle, **en ce que** chaque moitié de la paroi d'une cage (402) est constituée d'un demi-cylindre, et **en ce que** chaque moitié de la paroi d'un cône (502) est constituée d'un demi-cône de révolution.

6. Procédé de fabrication d'un assemblage (100) selon l'une des revendications 1 à 3, comportant :
- une première étape au cours de laquelle une première bande (350) de la deuxième structure (112) est fixée à une première bande (250) de la première structure (110),
- une deuxième étape au cours de laquelle une deuxième bande (352) de la deuxième structure (112) est fixée à la première bande (350) de la deuxième structure (112) ainsi fixée,
- une troisième étape au cours de laquelle une deuxième bande (252) de la première structure (110) est fixée à la deuxième bande (352) de la deuxième structure (112) ainsi fixée,
- tant qu'une première structure (110) ou une deuxième structure (112) doit être ajoutée, une étape de bouclage sur la première étape en considérant que la deuxième bande (252) de la première structure (110) ainsi fixée constitue la première bande (250) de la première structure (110) suivante,
- une étape au cours de laquelle, les premières et deuxièmes structures (110, 112) ainsi fixées sont fixées entre la première plaque (102) et la deuxième plaque (104).

## Patentansprüche

1. Anordnung (100, 400), die einen akustischen Isolator bildet und eine erste Platte (102) und eine mit Löchern (106) durchbohrte zweite Platte (104), mehrere erste Strukturen (110, 410), die nebeneinander in einer zweiten Richtung (203) angeordnet sind, und mehrere zweite Strukturen (112, 412), die nebeneinander in der zweiten Richtung (203) angeordnet sind, aufweist,
wobei jede erste Struktur (110, 410) eine Folge von Käfigen (202, 402), die jeweils eine Zelle (205) begrenzen, die einen Querschnitt mit einer Form aufweist, und zwischen zwei benachbarten Käfigen (202, 402) eine Verbindungswand (207), die aus zwei voneinander beabstandeten Abschnitten gebildet ist, aufweist,
wobei jede zweite Struktur (112, 412) eine Folge von Kegeln (302, 502), die jeweils eine Basis und eine Spitze aufweisen, und zwischen zwei benachbarten Kegeln (302, 502) eine aus zwei Abschnitten gebildete Verbindungswand (307) aufweist, wobei die Basis einen Querschnitt derselben Form wie der Querschnitt der Zellen (205) aufweist,
wobei jede erste Struktur (110, 410) aus einem ersten Streifen (250, 450) und einem zweiten Streifen (252, 452) gebildet ist, die einander gegenüberliegend angeordnet sind und sich zwischen der ersten Platte (102) und der zweiten Platte (104) erstrecken, wobei bei jedem Käfig (202, 402) der erste Streifen (250, 450) so geformt ist, dass er die Hälfte der Wand des Käfigs (202, 402) ausbildet, und der zweite Streifen (252, 452) so geformt ist, dass er die andere Hälfte der Wand des Käfigs (202, 402) ausbildet, und wobei bei zwei aufeinanderfolgenden Hälften jeder Streifen (250, 252, 450, 452) einen Abschnitt der Verbindungswand (207) aufweist, der zwei aufeinanderfolgende Hälften verbindet,
wobei jede zweite Struktur (112, 412) aus einem ersten Streifen (350, 550) und einem zweiten Streifen (352, 552) gebildet ist, die einander gegenüberliegend angeordnet sind und sich zwischen der ersten Platte (102) und der zweiten Platte (104) erstrecken, wobei bei jedem Kegel (302, 502) der erste Streifen (350, 550) so geformt ist, dass er die Hälfte der Wand des Kegels (302, 502) ausbildet, und der zweite Streifen (352, 552) so geformt ist, dass er die andere Hälfte der Wand des Kegels (302, 502) ausbildet, wobei bei jedem Streifen (350, 352, 450, 452) zumindest eine der Hälften der Wand jedes Kegels (302, 502) mit einem Loch (354) durchbohrt ist und wobei bei zwei aufeinanderfolgenden Hälften jeder Streifen (350, 352, 450, 452) einen Abschnitt der Verbindungswand (307) aufweist, der zwei aufeinanderfolgende Hälften verbindet,
so dass sich jeder Kegel (302, 502) in einer Zelle (205) befindet und dass sich jede Verbindungswand (307) zwischen den beiden Abschnitten einer Verbindungswand (207) befindet, und wobei zwischen zwei benachbarten ersten Strukturen (110, 410) auch eine zweite Struktur (112, 412) vorgesehen ist.

2. Anordnung (100, 400) nach Anspruch 1, **dadurch gekennzeichnet, dass** zumindest ein Kegel (302, 502) asymmetrisch ist, so dass die Volumina der beiden Kammern (150, 152), die zwischen dem Kegel (302, 502) und der Wand des Käfigs (202, 402), in dem er untergebracht ist, geschaffen werden, unterschiedlich sind.

3. Anordnung (100, 400) nach einem der Ansprüche 1 oder 2, **dadurch gekennzeichnet, dass** zumindest eines der Enden der Streifen (250, 252, 350, 352, 450, 452, 550, 552) Bohrungen (160, 162) aufweist.

4. Anordnung (100) nach einem der Ansprüche 1 bis 3, **dadurch gekennzeichnet, dass** die Form ein Sechseck ist, dass jede Hälfte der Wand eines Käfigs (202) aus drei aufeinanderfolgenden Abschnitten (204) gebildet ist und dass jede Hälfte der Wand eines Kegels (302) aus drei aufeinanderfolgenden Abschnitten (304) gebildet ist.

5. Anordnung (400) nach einem der Ansprüche 1 bis 3, **dadurch gekennzeichnet, dass** die Form ein Kreis ist, dass jede Hälfte der Wand eines Käfigs (402) aus einem Halbzylinder gebildet ist und dass jede Hälfte der Wand eines Kegels (502) aus einem halben Kreiskegel gebildet ist.

6. Verfahren zur Herstellung einer Anordnung (100) nach einem der Ansprüche 1 bis 3, umfassend:
- einen ersten Schritt, bei dem ein erster Streifen (350) der zweiten Struktur (112) an einem ersten Streifen (250) der ersten Struktur (110) befestigt wird,
- einen zweiten Schritt, bei dem ein zweiter Streifen (352) der zweiten Struktur (112) am ersten Streifen (350) der so befestigten zweiten Struktur (112) befestigt wird,
- einen dritten Schritt, bei dem ein zweiter Streifen (252) der ersten Struktur (110) am zweiten Streifen (352) der so befestigten zweiten Struktur (112) befestigt wird,
- solange eine erste Struktur (110) oder eine zweite Struktur (112) hinzugefügt werden soll, einen Schritt der Rückkehr zum ersten Schritt, wobei berücksichtigt wird, dass der zweite Streifen (252) der so befestigten ersten Struktur (110) den ersten Streifen (250) der nächsten ersten Struktur (110) bildet,
- einen Schritt, bei dem die so befestigten ersten und zweiten Strukturen (110, 112) zwischen der ersten Platte (102) und der zweiten Platte (104) befestigt werden.

## Claims

1. Assembly (100, 400) forming an acoustic insulator and having a first sheet (102), a second sheet (104) pierced with holes (106), a plurality of first structures (110, 410) disposed alongside one another in a second direction (203), and a plurality of second structures (112, 412) disposed alongside one another in the second direction (203),
wherein each first structure (110, 410) comprises a succession of cages (202, 402), each delimiting a cell (205) having a cross section with a given shape, and, between two adjacent cages (202, 402), a joining wall (207) made up of two facets spaced apart from one another,
wherein each second structure (112, 412) comprises a succession of cones (302, 502), each having a base and a tip, and, between two adjacent cones (302, 502), a connecting wall (307) made up of two facets, wherein the base has a cross section with the same shape as the cross section of the cells (205),
wherein each first structure (110, 410) is made up of a first strip (250, 450) and a second strip (252, 452) that are disposed facing one another and extend between the first sheet (102) and the second sheet (104), wherein, for each cage (202, 402), the first strip (250, 450) is shaped to form half of the wall of said cage (202, 402) and the second strip (252, 452) is shaped to form the other half of the wall of said cage (202, 402), and wherein, for two successive halves, each strip (250, 252, 450, 452) comprises one facet of the joining wall (207) that connects two consecutive halves,
wherein each second structure (112, 412) is made up of a first strip (350, 550) and a second strip (352, 552) that are disposed facing one another and extend between the first sheet (102) and the second sheet (104), wherein, for each cone (302, 502), the first strip (350, 550) is shaped to form half of the wall of said cone (302, 502) and the second strip (352, 552) is shaped to form the other half of the wall of said cone (302, 502), wherein, for each strip (350, 352, 450, 452), at least one of the wall halves of each cone (302, 502) is pierced by a hole (354), and wherein, for two successive halves, each strip (350, 352, 450, 452) comprises one facet of the connecting wall (307) that connects two consecutive halves,
such that each cone (302, 502) is located in a cell (205) and such that each connecting wall (307) is located between the two facets of a joining wall (207), and wherein, between two adjacent first structures (110, 410), a second structure (112, 412) is likewise fitted.

2. Assembly (100, 400) according to Claim 1, **characterized in that** at least one cone (302, 502) is asymmetric, such that the volumes of the two chambers (150, 152) created between said cone (302, 502) and the wall of the cage (202, 402) in which it is housed are different.

3. Assembly (100, 400) according to either of Claims 1 and 2, **characterized in that** at least one of the ends of the strips (250, 252, 350, 352, 450, 452, 550, 552) has pierced holes (160, 162).

4. Assembly (100) according to one of Claims 1 to 3, **characterized in that** the shape is a hexagon, **in that** each wall half of a cage (202) is made up of three successive facets (204), and **in that** each half of the wall of a cone (302) is made up of three successive facets (304) .

5. Assembly (400) according to one of Claims 1 to 3, **characterized in that** the shape is a circle, **in that** each half of the wall of a cage (402) is made up of a half-cylinder, and **in that** each half of the wall of a cone (502) is made up of a half-cone of revolution.

6. Method for manufacturing an assembly (100) according to one of Claims 1 to 3, comprising:
- a first step, during which a first strip (350) of the second structure (112) is fastened to a first strip (250) of the first structure (110),
- a second step, during which a second strip (352) of the second structure (112) is fastened to the first strip (350) of the second structure (112) thus fastened,
- a third step, during which a second strip (252) of the first structure (110) is fastened to the second strip (352) of the second structure (112) thus fastened,
- as long as a first structure (110) or a second structure (112) needs to be added, a step of returning to the first step considering that the second strip (252) of the first structure (110) thus fastened constitutes the first strip (250) of the following first structure (110),
- a step during which the first and second structures (110, 112) thus fastened are fastened between the first sheet (102) and the second sheet (104).
